# EUROPÄISCHE PATENTSCHRIFT

(11) **EP 1 839 791 B1**
(45) Veröffentlichungstag und Bekanntmachung des Hinweises auf die Patenterteilung: **09.04.2014**
(21) Anmeldenummer: 07002788.3
(22) Anmeldetag: 09.02.2007
(51) Int. Cl.: B23D 45/06, B23D 47/02

(54) **Tischkreissäge**
Circular saw bench
Scie circulaire à table

(30) Priorität: 31.03.2006 DE 202006005377 U; 29.05.2006 DE 202006008586 U
(43) Veröffentlichungstag der Anmeldung: 03.10.2007
(60) Teilanmeldung: 08006843.0
(73) Patentinhaber: Metabowerke GmbH, 72622 Nürtingen (DE)
(72) Erfinder: Imholt, Antonius, 49835 Wietmarschen-Lohne (DE); Jansen, Heinz, 46767 Twist (DE); Meelker, Thomas, 46767 Twist (DE); Moorkamp, Christian, 49688 Lastrup (DE); Niemann, Bernhard, 49740 Haselünne (DE); Raasch, Klaus, 49744 Geeste (DE); Wessels, Christian, 49744 Geeste (DE); Wittrock, Werner, 49733 Haren-Wesuwe (DE)
(74) Vertreter: Lorenz, Markus

(56) Entgegenhaltungen:
- EP-A- 1 116 539
- EP-A- 1 591 215
- EP-A1- 0 341 679
- EP-A1- 0 715 934
- DE-A1- 2 063 757
- DE-A1- 4 244 149
- DE-U1- 8 906 778
- US-A1- 2002 129 688

## Beschreibung

Die Erfindung betrifft eine Tischkreissäge mit den Merkmalen des Oberbegriffs von Anspruch 1. Eine solche Tischkreissäge ist aus EP 0 341 679 A1 bekannt.

Tischkreissägen der in Rede stehenden Art, also Unterflurzugsägen, sind seit langem in vielen verschiedenen Ausführungsformen bekannt. Grundprinzip einer Unterflurzugsäge ist die Anordnung des Sägeaggregates in einem Schlitten, der unter der Tischplatte im Außengehäuse in Längsrichtung des Außengehäuses verschiebbar ist. Dadurch kann man das Kreissägeblatt im Längsschlitz von hinten nach vorne ziehen und dadurch das Werkstück beim Kappen auf der Tischplatte ortsfest liegen lassen. Dadurch wird eine besonders gute Schnittqualität erreicht. Die Unterflurzugsäge kann man aber auch wie eine normale Tischkreissäge betreiben, wenn man das Sägeaggregat etwa in die Mitte der Tischplatte zieht und dort arretiert. Um außerdem noch Gehrungsschnitte ausführen zu können, ist regelmäßig das Sägeaggregat auch bezüglich einer in Längsrichtung verlaufenden Gehrungsschnittachse jedenfalls nach einer Seite hin neigbar. Die Höhenverstellung und die Neigungsverstellung des Sägeaggregates befindet sich dabei häufig im Schlitten.

Bei einer bekannten Unterflurzugsäge (EP-A-0 615 807) sind die Trag- und Führungsschienen an der Unterseite der Tischplatte fest angebracht, beispielsweise angeschraubt, so daß die Verschiebeführung des Sägeaggregates nur wenig tiefer als der Sägeschlitz in der Tischplatte liegt. Die Trag- und Führungsschienen können an der Tischplatte angeschraubt sein, sie können aber auch als Teil eines Extrusionsprofils aus Aluminium von vornherein mit einem Segment der Tischplatte einstückig ausgebildet sein, Eine segmentartige Ausfuehrung der Tischplatte, wie sie bei dieser bekannten Tischkreissäge vorgesehen ist, schafft eine gute Zugänglichkeit des unter der Tischplatte befindlichen Bereiches auch von oben.

Bei der bekannten Tischkreissäge greifen die dort als Lagerrollen ausgeführten Lagerelemente des Schlittens an einer Führungsschiene wirkungsmäßig in allen Richtungen, an der anderen Führungsschiene jedoch in Querrichtung nicht an. Die eine nahe dem rechten Rand der Tischplatte angeordnete Trag- und Führungsschiene übernimmt mit den drei dort jeweils im Winkel von 120° gegeneinander versetzt angeordneten Lagerrollen die komplette Ausrichtung des Sägeaggregates relativ zum Sägeschlitz. Die zweite Trag- und Führungsschiene befindet sich jenseits des Längsschlitzes in etwa demselben seitlichen Abstand vom Sägeschlitz nahe dem linken Rand der Tischplatte.

Die Konstruktion der Trag- und Führungsschienen bei der bekannten Tischkreissäge ist zwar präzise, jedoch kostenaufwendig. Gehärtete, absolut gerade Führungsstangen als Trag- und Führungsschienen sind teuer, die Anordnung der drei Lagerrollen im Winkel von jeweils 120° gegeneinander versetzt führt zu einer aufwendigen Konstruktion der Lagerelemente. Wegen des erheblichen seitlichen Abstandes der beiden Führungsschienen vom Längsschlitz läßt im übrigen die Präzision der Längsführung des Kreissägeblattes im Längsschlitz zu wünschen übrig.

Im übrigen sind generell für Tischkreissägen, insbesondere in Form von Unterflurzugsägen, außenseitig geschlossene oder außenseitig offene, also im unteren Bereich seitlich zugängliche Außengehäuse bekannt. Es ist ferner bekannt, die die Werkstückauflagefläche bildende Tischplatte mit integrierten, beispielsweise daran einstückig ausgeformten, oder mit angesetzten, insbesondere angeschraubten oder angeklemmten Führungsschienen für Längsanschläge, Queranschläge oder Winkelanschläge zu versehen (EP-A-0 615 807; DE-A-40 25 440). Schließlich ist es bekannt, das beispielsweise offene Außengehäuse der Unterflurzugsäge mit einem einklappbaren Untergestell mit integrierter Höhenverstellung zu versehen (Prospekt "UK 333" 0804 ELEKTRA BECKUM).

Bei der weiteren bekannten Unterflurzugsäge, von der die Erfindung ausgeht (EP-A-0 341 679), ist die Konstruktion der Trag- und Führungsschienen bereits konstruktiv einfacher realisiert worden, und zwar mit einer vergleichsweise flach bauenden Lagerung direkt unterhalb der Tischplatte. Dort sind rechts und links relativ weit beabstandet vom Sägeschlitz in der Tischplatte die beiden Führungsschienen an der Unterseite der Tischplatte integral ausgeformt. Insbesondere ist die Tischplatte als Extrusionsprofil aus Leichtmetall ausgeführt, Die Lagerelemente am Schlitten sind als Lagerrollen ausgeführt und auf im wesentlichen senkrecht zur Tischplatte ausgerichteten Lagerachsen drehbar gelagert.

Der erhebliche Abstand der Führungsschienen mit dem dazwischen befindlichen Sägeschlitz läßt auch hier die Präzision der Längsführung des Kreissägeblattes im Längsschlitz noch verbesserungsfähig erscheinen.

Der Lehre liegt das Problem zugrunde, die bekannte Unterflurzugsäge bei vorzüglicher Einstellpräzision konstruktiv zu vereinfachen.

Die zuvor aufgezeigte Problemstellung wird bei einer Tischkreissäge mit den Merkmalen des Oberbegriffs von Anspruch 1 durch die Merkmale des kennzeichnenden Teils von Anspruch 1 gelöst.

Vorteilhafte ist vorgesehen, daß die beiden Führungsschienen nahe aneinander heranrücken und auf einer Seite des Sägeschlitzes rechts und links an einem einzigen Schienenprofil ausgebildet und vorzugsweise nur etwa 20 mm bis etwa 100 mm voneinander beabstandet sind. Dadurch gewinnen beide Führungsschienen eine gleichwertige Bedeutung. Die Fertigungstoleranzen sind gering, weil beide Führungsschienen an dem einzigen Schienenprofil ausgebildet sind. Es gibt keine zwischen den Führungsschienen befindlichen weiteren Elemente, die hier Einfluß hätten.

Von besonderer Bedeutung ist die Positionierung des die Führungsschienen bildenden Schienenprofils, wozu auf die Ansprüche 3 bis 6 hingewiesen wird.

Eine reine Abstützschiene, die also keine Führungsfunktion hat, kann gemäß Anspruch 7 vorgesehen sein.

Mit der erfindungsgemäßen Konstruktion kann man bei zweckmäßiger Anordnung und Ausführung der Lagerelemente eine sehr flach bauende Lagerung direkt unterhalb der Tischplatte realisieren, Dazu wird auf die Ansprüche 8 bis 12 verwiesen. Diese Konstruktion ist auch von der Anordnung der Lagerelemente und von deren Ausführung her besonders zwecksmäßig.

Schutz- und Abstreifelemente können die Lagerelemente vor vorzeitiger Verschmutzung schützen.

Im folgenden wird die Erfindung anhand der Zeichnung näher erläutert. Dabei werden auch bevorzugte Ausführungsformen und besondere Vorteile der Erfindung eigenständig erläutert. Die Zeichnung zeigt ein besonders bevorzugtes Ausfuhrungsbeispiel einer erfindungsgemäßen Tischkreissäge mit Unterflur-Zugfunktion. In der Zeichnung zeigt
- Fig. 1: eine perspektivische Ansicht einer erfindungsgemäßen Tischkreissäge mit Untergestell,
- Fig. 2: perspektivisch, in einer Draufsicht, die Tischplatte der Tischkreissäge, teilweise aufgeschnitten, um das darunter befindliche Sägeaggregat sehen zu können,
- Fig. 3: einen Querschnitt durch die Tischplatte mit dem darunter angeordneten Sägeaggregat,
- Fig. 4: eine Draufsicht auf die Oberseite des Schlittens mit den daran angeordneten, die Lagerelemente bildenden Lagerrollen.

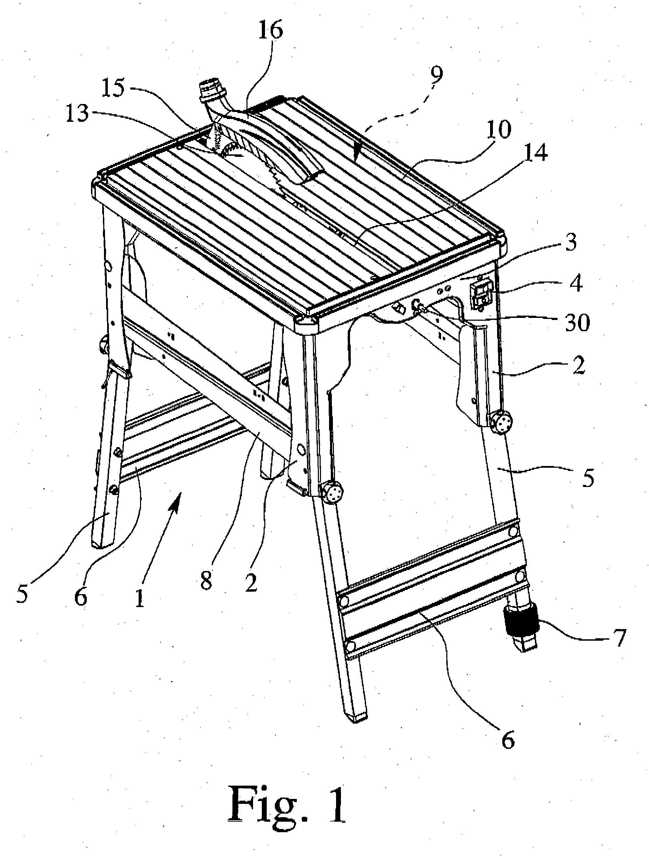

Die in Fig. 1 in perspektivischer Ansicht dargestellte Tischkreissäge weist zunächst ein Außengehäuse 1 auf, das im dargestellten Ausführungsbeispiel offen ist, im Stand der Technik aber auch häufig geschlossen vorkommt. Das Außengehäuse 1 hat vier Eckwinkel 2 und, soweit in Fig, 1 ersichtlich, ein die beiden vorderen Eckwinkel 2 verbindendes Wandstück 3, an dem man in Fig. 1 rechts eine Schalteranordnung 4 erkennt. Die vier Eckwinkel 2 werden von einem Untergestell getragen, das aus zwei jeweils zwei Beine 5 bildenden, einklappbaren Gestellhälften 6 besteht, wie das an sich aus dem Stand der Technik bekannt ist (siehe oben "UK 333"). Ein Bein 5 ist mit einer typischen Höhenverstellung 7 ausgerüstet. Zur Versteifung des insgesamt offenen Außengehäuses 1 sind die Eckwinkel 2 in Längsrichtung mit Versteifungsstreben 8 verbunden und versteift. Die Elemente des Außengehäuses 1 bestehen soweit wie bisher erläutert vorzugsweise aus abgekanteten Blechen. Es sind auch entsprechende Außengehäuse 1 bekannt, die auch in diesem Bereich verschiedene Elemente als Gußteile oder Extrusionsprofile aufweisen.

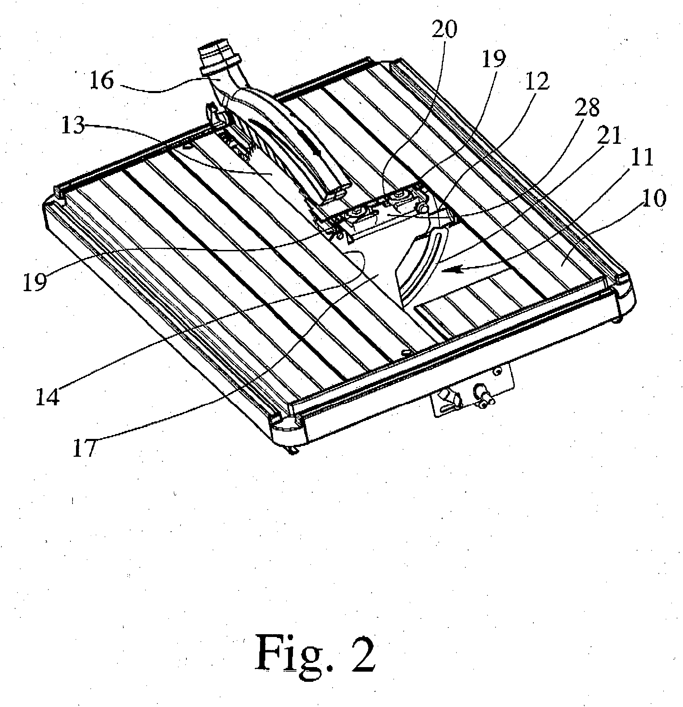

Besonders interessant ist nun die eine Werkstückauflagefläche 9 bildende, hier mehrteilige Tischplatte 10. Fig. 1 und Fig. 2 lassen im Zusammenhang erkennen, daß sich unter der Tischplatte 10 ein Sägeaggregat 11 mit einem Antriebsmotor 12 befindet. Vom Antriebsmotor 12 wird ein Kreissägeblatt 13 angetrieben, das die Tischplatte 10 von unten her in einem Sägeschlitz 14 durchsetzt. In Fig. 1 und 2 erkennt man die Ausrüstung des Sägeaggregates 11 mit einem höhenverstellbaren und auswechselbaren Spaltkeil 15 und einer daran angebrachten Späneabsaughaube 16, wie das sicherheitstechnisch vorgeschrieben ist.

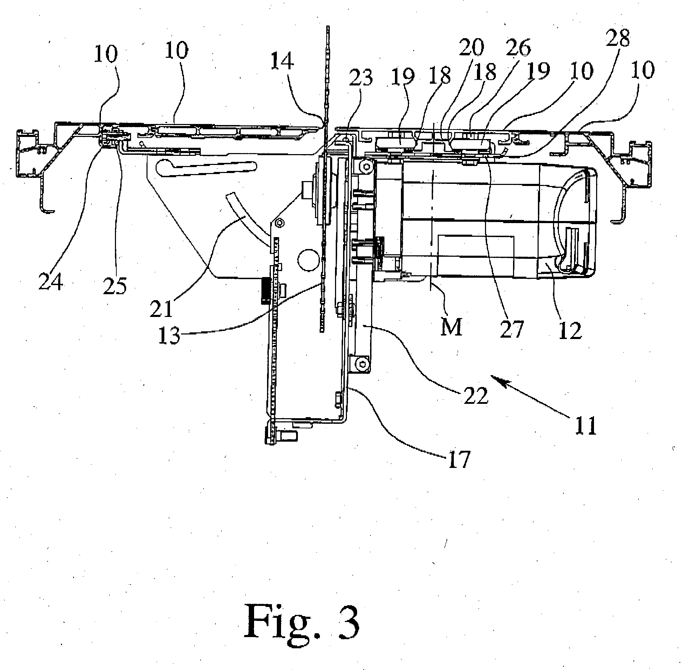

Der Sägeschlitz 14 erstreckt sich über einen erheblichen Teil, hier über die volle Länge der Tischplatte 10 und definiert damit die Längsrichtung der Tischkreissäge. Das Sägeaggregat 11 ist in Längsrichtung verschiebbar, wodurch sich das Kreissägeblatt 13 im Sägeschlitz 14 in Längsrichtung bewegt. Fig. 2 und 3 lassen im Zusammenhang erkennen, daß das Sägeaggregat 11 an oder in einem Schlitten 17 angeordnet ist. Der Schlitten 17 ist an zwei an der Unterseite der Tischplatte 10 fest angebrachten, in Längsrichtung parallel zueinander verlaufenden und in Querrichtung voneinander beabstandeten Trag- und Führungsschienen 18 mittels Lagerelementen 19 verschiebbar aufgehängt.

Wesentlich ist nun, daß die beiden Führungsschienen 18 rechts und links an einem einzigen Schienenprofil 20 ausgebildet und nur wenige Zentimeter voneinander beabstandet sind, Genau gesagt sind im dargestellten Ausführungsbeispiel die Führungsschienen 18 am Schienenprofil 20 nur etwa 20 mm bis etwa 100 mm, hier und vorzugsweise etwa 30 mm, voneinander beabstandet. Man sieht die Lage beider Führungsschienen 18 auf ein und derselben Seite des Sägeschlitzes 14.

Diese kompakte Anordnung der Führungsschienen 18 an einem Schienenprofil 20 hat zur Folge, daß die Toleranzen sich ausschließlich aus den Toleranzen bei der Herstellung des Schienenprofils 20 ergeben. Damit ist eine hochpräzise und gleichwohl sehr kostengünstig realisierbare Verschiebeführung für den Schlitten 17 vorgesehen.

Fig. 2 und 3 lassen noch kreisbogenförmige Führungsschienen 21 für die Seitenneigung des Sägeaggregats 11 zum Zwecke der Ausführung von Gehrungsschnitten erkennen. Außerdem zeigt Fig. 3 rechts am Antriebsmotor 12 im wesentlichen vertikal verlaufende Tragstangen 22, an denen der Antriebsmotor 12 höhenverstellbar angebracht ist. Somit kann durch Höhenverstellung des Antriebsmotors 12 in an sich bekannter Weise die Lage des Kreissägeblattes 13 in der Höhe relativ zur Werkstückauflagefläche 9 verstellt werden.

schließlich erkennt man in Fig. 3 sehr nahe zur Werkstückauflagefläche 9 den Drehpunkt 23 für die seitliche Neigungsverstellung des Sägeaggregates 11, ebenfalls in an sich bekannter Weise.

Im dargestellten und bevorzugten Ausführungsbeispiel ist nun vorgesehen, daß das Schienenprofil 20 in Querrichtung der Tischkreissäge gesehen in einem Bereich zwischen der Mitte und etwa einem Viertel der Breite der Tischkreissäge angeordnet ist. Das dargestellte und bevorzugte Ausführungsbeispiel zeigt das Schienenprofil 20 bei etwa einem Drittel der Breite der Tischkreissäge. Die Lagerung mit dem Schienenprofil 20 ist also nahe an den Sägeschlitz 14 herangerückt.

Ferner ist vorgesehen, daß die Lagerelemente 19 am Schlitten 17 oberhalb des Antriebsmotors 12, vorzugsweise nahe dem Lagerschild des Antriebsmotors 12, angeordnet sind. Das alles führt dann insgesamt dazu, daß im dargestellten und bevorzugten Ausführungsbeispiel die vertikale Mittelebene M zwischen den den beiden Führungsschienen 18 zugeordneten Lagerelementen 19 am Schlitten 17 bei vertikal ausgerichtetem Kreissägeblatt 13 durch den oder nahe dem Schwerpunkt der von Sägeaggregat 11 und Schlitten 17 gebildeten Einheit verläuft. Man kann anhand von Fig, 3 ungefähr absehen, wo der Schwerpunkt der Einheit liegt, es wird etwas links von der Mittelebene M in der Darstellung von Fig. 3 sein. Wesentlich ist, daß dadurch beim Verfahren des Sägeaggregates 11 in der Zugfunktion die auf das Schienenprofil 20 wirkenden Kippmomente möglichst gering sind.

Im dargestellten und insoweit auch bevorzugten Ausführungsbeispiel werden die Kippmomente im übrigen noch weiter abgegangen. Dazu ist vorgesehen, daß an der Unterseite der Tischplatte 10, in Querrichtung von dem Schienenprofil 20 weit beabstandet, insbesondere nahe dem auf der gegenüberliegenden Seite des Sägeschlitzes 14 befindlichen Längsrand der Tischplatte 10, eine Abstützschiene 24 fest angebracht ist und am Schlitten 17 in Querrichtung von den Lagerelementen 19 entsprechend weit beabstandet mindestens ein weiteres Lagerelement 25 angeordnet ist, das auf, an oder in der Abstützschiene 24 laufend am Schlitten 17 angreifende Kippmomente an der Abstützschiene 24 abfängt. Hier läuft eine entsprechende Lagerrolle als Lagerelement 25 auf der einstückig am entsprechenden Segment der Tischplatte 10 ausgeformten Abstützschiene 24.

Das dargestellte und bevorzugte Ausführungsbeispiel realisiert, wie bereits im Stand der Technik für andere Schienen verwirklicht, daß das Schienenprofil 20 an der Tischplatte 10, genauer gesagt an einem Segment der Tischplatte 10 integral ausgeformt ist. Dazu ist vorgesehen, daß die Tischplatte 10 bzw. hier das Segment der Tischplatte 10 als Extrusionsprofil aus Leichtmetall, hier und bevorzugt aus Aluminium, ausgeführt ist. Das Schienenprofil 20 ist, in Fig. 3 gut erkennbar, Teil des Extrusionsprofils. Das ist fertigungstechnisch sehr zweckmäßig, führt zu optimalen Toleranzen und ist auch sehr kostengünstig.

Bislang ist über die genaue Konstruktion des Schienenprofils 20 noch nichts weiter gesagt worden. Aber auch das ist hier eine ganz besonders zweckmäßige Lösung. Vorgesehen ist nämlich, daß im dargestellten Ausführungsbeispiel die Führungsschienen 18 von nach rechts bzw. nach links offenen, keilförmigen oder bogenförmigen Nuten am Schienenprofil 20 gebildet sind und daß die Lagerelemente 19 als Lagerrollen, vorzugsweise als direkt kunststoffummantelte Kugellager, ausgeführt sind.

Im dargestellten und insoweit bevorzugten Ausführungsbeispiel sind die Lagerrollen 19 am Umfang mit einer zur Kontur der Führungsschienen 18 passenden Kontur ausgeführt. Ferner ist vorgesehen, daß die Lagerrollen 19 am Schlitten 17 auf im wesentlichen senkrecht zur Tischplatte 10 ausgerichteten Lagerachsen 26 drehbar gelagert sind. Dadurch kommt man zu einer sehr flach bauenden Rollenlagerung am Schienenprofil 20.

Im bevorzugten Ausführungsbeispiel ist vorgesehen, daß die Lagerrollen 19 einen Außendurchmesser von etwa 20 bis 40 mm, vorzugsweise von etwa 30 mm, und/oder eine Dicke von etwa 5 bis 12 mm, vorzugsweise von etwa 8 bis 9 mm, aufweisen.

Fig. 3 läßt erkennen, daß im dargestellten und bevorzugten Ausführungsbeispiel jeweils zwei den beiden Führungsschienen 18 zugeordnete Lagerrollen 19 einander gegenüberstehend angeordnet sind und eine der beiden Lagerrollen 19 in Querrichtung an das Schienenprofil 20 anstellbar und angestellt fixierbar ist. In Fig. 3 erkennt man bei der rechts dargestellten Lagerrolle 19 unten ein Langloch 27, in dem die Lagerachse 26 dieser Lagerrolle 19 seitlich verschoben werden kann. In der in Fig. 3 dargestellten Endstellung wird die Lagerachse 26 an der Plattform 28 des Schlittens 17 verspannt und so gegenüber dem Schienenprofil 20 fixiert. Eine ähnliche Anstellung und Fixierung kann man beispielsweise auch mit einer Exzenteranordnung erreichen. Auch die Verwendung einer Zahnleiste wäre denkbar, allerdings ist eine stufenlose Anstellung hinsichtlich der Toleranzen natürlich zweckmäßiger.

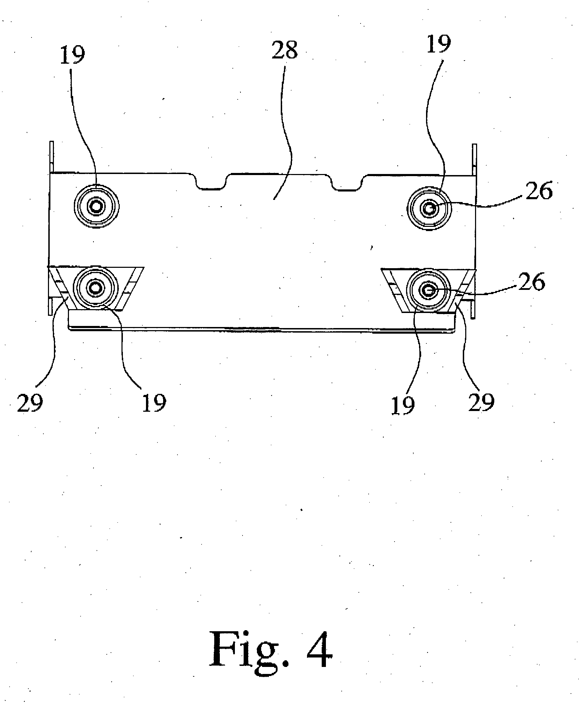

Fig. 4 macht deutlich, daß im dargestellten und bevorzugten Ausführungsbeispiel vorgesehen ist, daß je Führungsschiene 18 zwei in Längsrichtung mit erheblichem Abstand voneinander angeordnete Lagerelemente 19 vorgesehen sind. Insbesondere ist vorgesehen, daß die Lagerelemente 19 in einem Abstand von etwa 180 bis 280 mm, vorzugsweise von etwa 225 mm, angeordnet sind. Diese Maße gelten für typische Abmessungen einer solchen Tischkreissäge, beispielsweise mit einer Breite der Tischplatte von etwa 500 mm und einer Zuglänge des Kreissägeblattes 13 von etwa 300 mm bei einem Durchmesser des Kreissägeblattes 13 von etwa 200 bis 250 mm.

Wie bereits oben angesprochen bietet die vorliegende Lehre der Erfindung die Möglichkeit, eine sehr flach bauende Lagerung am Schienenprofil 20 zu verwirklichen, Dadurch hängt das Sägeaggregat 11 sehr dicht unter der Tischplatte 10, was vorteilhaft ist. Das dargestellte und bevorzugte Ausführungsbeispiel macht es möglich, daß die Einbauhöhe der Lagerung, also der lichte Abstand zwischen der Unterseite der Tischplatte 10 und der Oberseite des Schlittens 17 im Bereich der Lagerelemente 19, etwa 12 bis 25 mm, vorzugsweise etwa 15 bis 18 mm, beträgt.

Fig. 4 läßt schließlich noch schematisch erkennen, daß den Lagerelementen 19 Schutz- und Abstreifelemente 29, vorzugsweise aus Kunststoffinaterial, zugeordnet sind. Diese dienen dazu, sich ansammelnden Schmutz von vorneherein nicht an die Lagerelemente 25 herankommen zu lassen, so daß eine langfristig wartungsfreie Lagerung des Schlittens 17 gewährleistet ist.

Bereits in Fig. 1 und Fig. 2 erkennt man am vorderen Wandstück 3 des Außengehäuses 1 die Spitze eines nach vorne herausragenden Zugstabes 30. Der Zugstab 30 dient dazu, den Schlitten 17 mitsamt dem Sägeaggregat 11 aus der in Fig. 1 und 2 dargestellten hinteren Endstellung nach vorne zu ziehen. Dadurch wird in einem auf der Werkstückauflagefläche 9 fixierten Werkstück ein Sägeschlitz erzeugt (Zugsägefunktion).

Wie bereits zu dem den Ausgangspunkt bildenden Stand der Technik erläutert worden ist, ist bei einer Unterflurzugsäge der Schlitten 17 mittels des daran angebrachten Zugstabes 30 gegen die Rückzugskraft einer den Schlitten 17 in seine hintere Endstellung ziehenden Rückzugsfeder verschiebbar. In seiner hinteren Endstellung ist der Schlitten 17 gegenüber dem Außengehäuse 1 fixierbar. Diese Fixierung kann durch Handbetätigung überwunden werden. Eine entsprechende Fixierung ergibt sich auch in einer weiteren Verschiebestellung, insbesondere in der Mittelstellung, bei der das Kreissägeblatt 13 etwa in der Mitte der Werkstückauflagefläche 9 wie bei einer normalen Tischkreissäge feststeht.

## Patentansprüche

1. Tischkreissäge
mit einem offenen oder geschlossenen Außengehäuse (1) mit einer eine Werkstückauflagefläche (9) bildenden, einteiligen oder mehrteiligen Tischplatte (10), mit einem unter der Tischplatte (10) angeordneten Sägeaggregat (11) mit einem Antriebsmotor (12) und einem von diesem angetriebenen Kreissägeblatt (13), das die Tischplatte (10) von unten her in einem Sägeschlitz (14) durchsetzt,
wobei der Sägeschlitz (14) sich über einen erheblichen Teil der Länge der Tischplatte (10) erstreckt und damit die Längsrichtung der Tischkreissäge definiert, wobei das Sägeaggregat (11) in Längsrichtung verschiebbar ist, wodurch das Kreissägeblatt (13) sich im Sägeschlitz (14) in Längsrichtung bewegt,
wobei das Sägeaggregat (11) an oder in einem Schlitten (17) angeordnet ist und wobei der Schlitten (17) an zwei an der Unterseite der Tischplatte (10) fest angebrachten, in Längsrichtung parallel zueinander verlaufenden und in Querrichtung voneinander beabstandeten Trag- und Führungsschienen (18) mittels Lagerelementen (19) verschiebbar aufgehängt ist,
**dadurch gekennzeichnet,**
**daß** die beiden Führungsschienen (18) auf derselben Seite des Sägeschlitzes (14) angeordnet sind und daß die beiden Führungsschienen (18) rechts und links an einem einzigen Schienenprofil (20) ausgebildet sind.

2. Tischkreissäge nach Anspruch 1, **dadurch gekennzeichnet,**
**daß** die beiden Führungsschienen (18) am Schienenprofil (20) nur etwa 20 mm bis etwa 100 mm voneinander beabstandet sind.

3. Tischkreissäge nach Anspruch 1 oder 2, **dadurch gekennzeichnet,**
**daß** das Schienenprofil (20) in Querrichtung der Tischkreissäge gesehen in einem Bereich zwischen der Mitte und etwa einem Viertel der Breite der Tischkreissäge angeordnet ist.

4. Tischkreissäge nach Anspruch 3, **dadurch gekennzeichnet,**
**daß** das Schienenprofil (20) bei etwa einem Drittel der Breite der Tischkreissäge angeordnet ist.

5. Tischkreissäge nach einem der voranstehenden Anspräche, **dadurch gekennzeichnet,**
**daß** die Lagerelemente (19) am Schlitten (17) oberhalb des Antriebsmotors (12), vorzugsweise nahe dem Lagerschild des Antriebsmotors (12), angeordnet sind.

6. Tischkreissäge nach einem der voranstehenden Ansprüche, **dadurch gekennzeichnet,**
**daß** die vertikale Mittelebene (M) zwischen den den beiden Führungsschienen (18) zugeordneten Lagerelementen (19) am Schlitten (17) bei vertikal ausgerichtetem Kreissägeblatt (13) durch den oder nahe dem Schwerpunkt der von Sägeaggregat (11) und Schlitten (17) gebildeten Einheit verläuft.

7. Tischkreissäge nach einem der voranstehenden Ansprüche, **dadurch gekennzeichnet,**
**daß** an der Unterseite der Tischplatte (10), in Querrichtung von dem Schienenprofil (20) weit beabstandet, insbesondere nahe dem auf der gegenüberliegenden Seite des Sägeschlitzes (14) befindlichen Längsrand der Tischplatte (10), eine Abstützschiene (24) fest angebracht ist und am Schlitten (17) in Querrichtung von den Lagerelementen (19) entsprechend weit beabstandet mindestens ein weiteres Lagerelement (25) angeordnet ist, das auf, an oder in der Abstützschiene (24) laufend am Schlitten (17) angreifende Kippmomente an der Abstützschiene (24) abfängt.

8. Tischkreissäge nach einem der voranstehenden Ansprüche, **dadurch gekennzeichnet,**
**daß** das Schienenprofil (20) an der Tischplatte (10) bzw, an einem Segment der Tischplatte (10) integral ausgeformt ist, und/oder
**daß** die Tischplatte (10) bzw. das Segment der Tischplatte (10) als Extrusionsprofil aus Leichtmetall, insbesondere aus Aluminium, ausgeführt und das Schienenprofil (20) Teil des Extrusionsprofils ist.

9. Tischkreissäge nach einem der voranstehenden Ansprüche, **dadurch gekennzeichnet,**
**daß** die Führungsschienen (18) von nach rechts bzw. nach links offenen, keilförmigen oder bogenförmigen Nuten am Schienenprofil (20) gebildet sind, und/oder
**daß** die Lagerelemente (19) als Lagerrollen, vorzugsweise als direkt kunststoffummantelte Kugellager, ausgeführt sind,
wobei, vorzugsweise, die Lagerrolle (19) umfangsseitig eine zur Kontur der Führungsschiene (18) passende Kontur aufweist.

10. Tischkreissäge nach Anspruch 9 , **dadurch gekennzeichnet,**
**daß** die Lagerrollen (19) am Schlitten (17) auf im wesentlichen senkrecht zur Tischplatte (10) ausgerichteten Lagerachsen (26) drehbar gelagert sind, und/oder daß die Lagerrollen (19) einen Außendurchmesser von etwa 20 bis 40 mm, vorzugsweise von etwa 30 mm, und/oder eine Dicke, von etwa 5 bis 12 mm, vorzugsweise von etwa 8 bis 9 mm, aufweisen, und/oder
**daß** jeweils zwei den beiden Führungsschienen (18) zugeordnete Lagerrollen (19) einander gegenüberstehend angeordnet sind und eine der beiden Lagerrollen (19) in Querrichtung an das Schienenprofil (20) anstellbar und angestellt fixierbar ist.

11. Tischkreissäge nach einem der voranstehenden Ansprüche, **dadurch gekennzeichnet,**
**daß** je Führungsschiene (18) zwei in Längsrichtung mit Abstand, vorzugsweise mit einem Abstand von etwa 180 bis 280 mm, voneinander angeordnete Lagerelement (19) vorgesehen sind.

12. Tischkreissäge nach den Ansprüchen 9 und 10 und ggf. Anspruch 11, **dadurch gekennzeichnet,**
**daß** die Einbauhöhe der Lagerung, also der lichte Abstand zwischen der Unterseite der Tischplatte (10) und der Oberseite des Schlittens (17) im Bereich der Lagerelemente (19), etwa 12 bis 25 mm, vorzugsweise etwa 15 bis 18 mm, beträgt.

13. Tischkreissäge nach einem der voranstehenden Ansprüche, **dadurch gekennzeichnet,**
**daß** den Lagerelementen (19) Schutz- und Abstreifelemente (29), vorzugsweise aus Kunststoffmaterial, zugeordnet sind.

## Claims

1. Circular saw bench
with an open or closed outer housing (1) with a single-part or multi-part bench plate (10) that forms a workpiece support surface (9), and with a sawing unit (11) which is arranged underneath said bench plate (10) and has a driving motor (12) and a circular saw blade (13) which is driven by said driving motor and which passes through the bench plate (10) from below within a sawing slot (14),
wherein said sawing slot (14) extends over a considerable portion of the length of the bench plate (10) and thereby defines the longitudinal direction of the circular saw bench;
wherein the sawing unit (11) is displaceable in the longitudinal direction, as a result of which the circular saw blade (13) is moved in the longitudinal direction within the sawing slot (14);
wherein the sawing unit (11) is arranged on or in a carriage (17); and wherein said carriage (17) is displaceably suspended, by means of bearing elements (19), on two mounting and guide rails (18) which are fixedly attached to the underside of the bench plate (10), extend parallel to one another in the longitudinal direction and are spaced apart from one another in the transverse direction,
**characterised in**
**that** the two guide rails (18) are arranged on the same side of the sawing slot (14), and
**that** said two guide rails (18) are constructed, on the right and left, on a single rail profile (20).

2. Circular saw bench according to Claim 1, **characterised in that** the two guide rails (18) are spaced only about 20 mm to about 100 mm apart from one another on the rail profile (20).

3. Circular saw bench according to Claim 1 or 2, **characterised in that** the rail profile (20) is arranged, viewed in the transverse direction of the circular saw bench, in an area between the centre and about one quarter of the width of said circular saw bench.

4. Circular saw bench according to Claim 3, **characterised in that** the rail profile (20) is arranged at about one third of the width of the circular saw bench.

5. Circular saw bench according to one of the previous claims, **characterised in**
**that** the bearing elements (19) are arranged on the carriage (17) above the driving motor (12) and preferably close to the bearing shield of said driving motor (12).

6. Circular saw bench according to one of the previous claims, **characterised in**
**that** the vertical median plane (M) between the bearing elements (19) on the carriage (17) which are associated with the two guide rails (18) extends, when the circular saw blade (13) is oriented vertically, through, or close to, the centre of gravity of the unit formed by the sawing unit (11) and carriage (17).

7. Circular saw bench according to one of the previous claims, **characterised in**
**that** a supporting rail (24) is fixedly attached to the underside of the bench plate (10) in a manner spaced far apart from the rail profile (20) in the transverse direction, in particular, close to that longitudinal edge of the bench plate (10) which is located on the opposite side of the sawing slot (14), and there is arranged on the carriage (17), in a manner spaced correspondingly far apart from the bearing elements (19) in the transverse direction, at least one further bearing element (25) which absorbs, at the supporting rail (24), tilting moments which are continuously acting upon the carriage (17) on, at or in said supporting rail (24).

8. Circular saw bench according to one of the previous claims, **characterised in**
**that** the rail profile (20) is integrally moulded onto the bench plate (10) or onto a segment of said bench plate (10), and/or
**that** the bench plate (10) or segment of said bench plate (10) is designed as an extruded profile made of light metal, in particular aluminium, and the rail profile (20) is part of said extruded profile.

9. Circular saw bench according to one of the previous claims, **characterised in**
**that** the guide rails (18) are formed by wedge-shaped or arc-shaped grooves on the rail profile (20) which are open towards the right or left respectively, and/or
**that** the bearing elements (19) are designed as bearing rollers, and preferably as ball bearings which are directly sheathed in plastic, wherein the bearing roller (19) preferably has, on its periphery, a contour that fits the contour of the guide rail (18).

10. Circular saw bench according to Claim 9, **characterised in that** the bearing rollers (19) are rotatably mounted on the carriage (17) on bearing spindles (26) that are oriented substantially perpendicularly to the bench plate (10), and/or
that the bearing rollers (19) have an external diameter of about 20 to 40 mm, preferably of about 30 mm, and/or a thickness of about 5 to 12 mm, preferably of about 8 to 9 mm, and/or
that two bearing rollers (19) which are associated, in each case, with the two guide rails (18) are arranged opposite one another, and one of the two bearing rollers (19) can be adjusted to the rail profile (20) in the transverse direction and secured in the adjusted position.

11. Circular saw bench according to one of the previous claims, **characterised in**
**that** two bearing elements (19), which are arranged at a distance, preferably a distance of about 180 to 280 mm, from one another in the longitudinal direction, are provided per guide rail (18).

12. Circular saw bench according to Claims 9 and 10 and, if applicable, Claim 11, **characterised in**
**that** the installed height of the bearing arrangement, that is to say the clear distance between the underside of the bench plate (10) and the upper side of the carriage (17), is about 12 to 25 mm, and preferably about 15 to 18 mm, in the area of the bearing elements (19).

13. Circular saw bench according to one of the previous claims, **characterised in**
**that** protecting and stripping elements (29), preferably made of plastic material, are associated with the bearing elements (19).

## Revendications

1. Scie circulaire à plateau
comportant un bâti extérieur (1) ouvert ou fermé et un plateau de table (10) en un seul ou en plusieurs éléments et constituant une surface de support (9) de pièces et un agrégat de sciage (11) disposé sous le plateau de table (10) et comprenant un moteur d'entraînement (12) et une lame de scie (13) entraînée par le moteur, qui traverse par le dessous le plateau de table (10) à travers une fente de scie (14),
dans laquelle la fente de scie (14) s'étend sur une part substantielle de la longueur du plateau de table (10) et définit de cette manière la direction longitudinale de la scie circulaire à plateau,
dans laquelle l'agrégat de sciage (11) est mobile longitudinalement, de sorte que la lame de scie (13) se déplace dans la direction longitudinale dans la fente de sciage (14),
dans laquelle l'agrégat de sciage (11) est monté sur ou dans un chariot (17), et dans laquelle le chariot (17) est coulissant et suspendu sous le plateau de table (10), au moyen d'éléments de roulements (19), à deux rails de support et de guidage (18), parallèles entre eux, disposés selon la direction longitudinale avec un écartement constant dans une direction transversale,
**caractérisée en ce que**,
les deux rails de guidage (18) sont disposés du même côté de la fente de scie (14) et que les deux rails de guidage (18) sont formés à droite et à gauche d'un profil de rail unique (20).

2. Scie circulaire à plateau selon la revendication 1, **caractérisée en ce que**
les deux rails de guidage (18) sont écartés de 20 mm à 100 mm l'un de l'autre sur le profil de rail (20).

3. Scie circulaire à plateau selon la revendication 1 ou 2, **caractérisée en ce que**
le profil de rail (20), vu selon une direction transversale est disposé dans un secteur se situant entre le milieu et environ un quart de la largeur de la scie circulaire à plateau.

4. Scie circulaire à plateau selon la revendication 3, **caractérisée en ce que** le profil de rail (20) est disposé à environ un tiers de la largeur de la scie circulaire à plateau.

5. Scie circulaire à plateau selon l'une des revendications précédentes, **caractérisée en ce que**
les éléments de roulement (19) sont montés sur le chariot (17) au-dessus du moteur d'entraînement (12) de préférence à proximité de la plaque de montage du moteur d'entraînement (12).

6. Scie circulaire à plateau selon l'une des revendications précédentes, **caractérisée en ce que**
le plan médian (M) entre les éléments de roulements (19) associés aux deux rails de guidage (18) sur le chariot (17) se situe au ou à proximité du centre de gravité de l'unité constituée par l'agrégat de sciage (11) et le chariot (17) lorsque la lame de scie (13) est disposée verticalement.

7. Scie circulaire à plateau selon l'une des revendications précédentes, **caractérisée en ce que**
un rail d'appui (24) est fixé sous le plateau de table (10),transversalement par rapport au profil de rail (20), largement éloigné, en particulier localisé à proximité du bord longitudinal du plateau de table (10) opposé au côté de la fente de scie (14), et au moins un deuxième élément de roulement (25) est disposé transversalement par rapport à l'élément de roulement (19), sensiblement éloigné, pour recevoir des composants de basculement qui sont en prise avec le rail d'appui (24) coulissant sur le chariot (17).

8. Scie circulaire à plateau selon l'une des revendications précédentes, **caractérisée en ce que**
le profil de rail (20) est formé intégralement dans le plateau de table (10), respectivement dans un segment du plateau de table (10) et/ou en ce que le plateau de table (10), respectivement le segment du plateau de table (10) est réalisé au moyen d'un profil d'extrusion en métal léger, en particulier en aluminium, et **en ce que** le profil de rail (20) est une partie du profil d'extrusion.

9. Scie circulaire à plateau selon l'une des revendications précédentes, **caractérisée en ce que**
les rails de guidage (18) présentent des rainures ouvertes de section conique ou courbe, vus de droite, respectivement de gauche, ménagées sur le profil de rail (20),
dans laquelle, le roulement (19) présente de préférence un contour périphérique correspondant au contour du rail de guidage (18).

10. Scie circulaire à plateau selon la revendication 9, **caractérisée en ce que**
les roulements (19) sont montés rotatifs sur le chariot (17) sur des axes de roulements (26) sensiblement perpendiculaires par rapport au plateau de table (10), et/ou **en ce que** les roulements (19) ont un diamètre extérieur entre 20 mm et 40 mm, de préférence d'environ 30 mm, et/ou une épaisseur d'environ 5 à 12 mm, de préférence environ 8 à 9 mm, et/ou en ce que les deux roulements (19) associés aux deux rails de guidage (18) sont disposés de façon opposée et que l'un des deux roulements (19) peut être ajusté transversalement contre le profil de rail (20) et fixé en position d'appui contre lui.

11. Scie circulaire à plateau selon l'une des revendications précédentes, **caractérisée en ce que**
pour chaque profil de guidage (18) deux roulements (19) sont prévus et sont disposés de préférence avec un écart d'environ 180 à 280 mm.

12. Scie circulaire à plateau selon la revendication 9 et 10 et, le cas échéant la revendication 11, **caractérisée en ce que**
le positionnement du système de roulements, c'est-à-dire l'espace entre le dessous du plateau de table (10) et le côté supérieur du chariot (17) dans le secteur des roulements (19) se situe entre 12 et 25 mm, de préférence entre 15et18mm.

13. Scie circulaire à plateau selon l'une des revendications précédentes, **caractérisée en ce que**
les éléments de roulements (19) sont pourvus d'éléments de protection et de racleurs (29), de préférence en matériau synthétique.
